# EUROPEAN PATENT SPECIFICATION

(11) **EP 2 174 288 B1**
(45) Date of publication and mention of the grant of the patent: **30.11.2011**
(21) Application number: 08830539.6
(22) Date of filing: 15.07.2008
(51) Int. Cl.: G06T 3/40

(54) **DYNAMIC RESIZING OF GRAPHICS CONTENT RENDERED BY AN APPLICATION TO FACILITATE RENDERING OF ADDITIONAL GRAPHICS CONTENT**
DYNAMISCHE GRÖSSENANPASSUNG VON IN EINER ANWENDUNG ZUR DARSTELLUNG ZUSÄTZLICHER GRAPHIKINHALTE DARGESTELLTEN GRAPHIKINHALTEN
REDIMENSIONNEMENT DYNAMIQUE D'UN CONTENU GRAPHIQUE REPRÉSENTÉ GRAPHIQUEMENT PAR UNE APPLICATION POUR FACILITER LA REPRÉSENTATION GRAPHIQUE D'UN CONTENU GRAPHIQUE SUPPLÉMENTAIRE

(30) Priority: 18.07.2007 US 779391
(43) Date of publication of application: 14.04.2010
(73) Proprietor: Exent Technologies, Ltd., 49125 Petach-Tikva (IL)
(72) Inventor: TZRUYA, Yoav, M., 40500 Even Yehuda (IL); NAVE, Itay, 40692 Kfar Hess (IL); LEVGOREN, Zvi, 55900 Ganei-tikva (IL)
(74) Representative: Palmer, Jonathan R.
(86) International application number: PCT/IB2008/003387
(87) International publication number: WO 2009/034478

(56) References cited:
- WO-A-91/15921
- WO-A-95/25399
- WO-A-2007/063422
- US-A1- 2002 040 322
- US-A1- 2004 148 221
- US-A1- 2007 143 603
- SCHU M ET AL: "System-on-Silicon solution for High Quality Consumer Video Processing The Next Generation" IEEE TRANSACTIONS ON CONSUMER ELECTRONICS, IEEE SERVICE CENTER, NEW YORK, NY, US, vol. 47, no. 3, 1 August 2001 (2001-08-01), pages 412-419, XP002283440
- CHALIL M ET AL: "MPEG-4 based framework for game engines to handle virtual advertisements in games" MULTIMEDIA AND EXPO, 2003. PROCEEDINGS. 6-9 JULY 2003, PISCATAWAY, NJ, USA,IEEE, 6 July 2003 (2003-07-06), pages I-413, XP002447240

## Description

### BACKGROUND OF THE INVENTION

### Field of the Invention

The invention generally relates to software applications, such as video game applications, that are configured to render graphics content to a display.

### Background

In-game advertising refers to the use of computer and video games as a medium in which to deliver advertising. It has been reported that spending on in-game advertising in 2005 was $56 million USD, and that this figure is estimated to grow to $1.8 billion by 2010. In-game advertising is seen by some in the games industry as offering a promising new revenue stream that may provide publishers with a way to offset growing game development costs. This extra revenue may also allow developers to reduce the risk involved in a game development project, allowing them to innovate on game play and experiment with new ideas.

One approach to in-game advertising is to incorporate advertising content directly within the graphics content rendered by a game, such that advertisements appear to be an integrated part of the game. For example, an advertisement may be placed within the context of a two-dimensional (2D) or three-dimensional (3D) scene rendered by a game. Examples of such in-game advertisements may comprise a virtual billboard or a virtual version of a commercial product rendered within the game environment. These in-game advertisements may be either static or dynamic in nature. Static advertisements are coded directly into the game application by programmers during development and cannot be changed later. In contrast, dynamic advertisements can be altered remotely during run-time by an advertising agency or other entity. Dynamic in-game advertising can be achieved by integrating the game code with an in-game advertising software development kit (SDK) during game development, or by utilizing approaches as described in commonly-owned co-pending U.S. Patent Application No. 11/290,830.

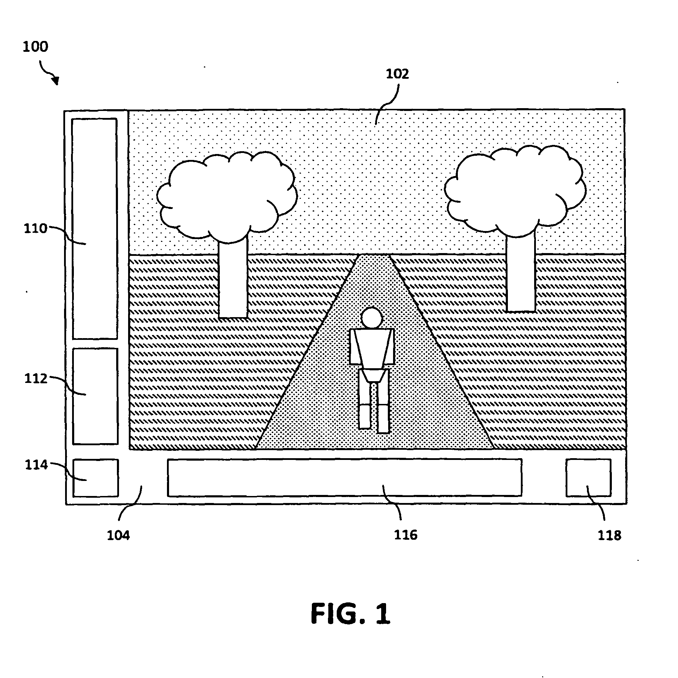

Another approach to in-game advertising is to dedicate a portion of the display area to which the game scene is being rendered to advertising content such that the advertising content appears separate and apart from the graphics content of the game. An example of this approach may be seen in FIG. 1, which depicts a display area 100 that has been partitioned into a game display portion 102 and an advertising display portion 104. Game display portion 102 is used to display a scene associated with the game while advertising display portion 104 is used to display advertising content, which in the example of FIG. 1 includes a plurality of advertisements 110, 112, 114, 116 and 118. Display area 100 may occupy the entire screen of a display device or only a portion thereof.

One benefit of the latter approach is that it is typically easier to sell, serve, create, render and track the viewing of advertisements appearing in advertising display portion 104, since they do not need to be included as an integrated part of a scene rendered by the game. For example, they do not need to be included as objects within a 3D scene rendered by the game. Another benefit of the latter approach is that it facilitates the rendering of advertisements of a standard size. For example, the advertisements rendered within advertising display portion 104 may comply with size guidelines published by a trade association such as the Interactive Advertising Bureau (IAB). The use of such standard-sized advertisements makes it easier for designers to develop advertisements for different publishers. The use of such standard-sized advertisements also makes it possible to develop a consistent size-based pricing scheme for selling such advertising space to marketers, to utilize an existing sales force to sell such advertising space, and to utilize standard web advertisement-serving systems to serve advertisements into advertising display portion 104.

One method for allocating and rendering graphics to both game display portion 102 and advertising display portion 104 of display area 100 is to program such functionality into a game during development. However, this method increases development time and costs and also binds the game to a particular format and type of in-game advertising. Another method is to design the game so that it renders graphics to only a portion of a display area such that it can be run in parallel with another application that serves advertisements to the unused portion of the display area. However, a game so designed could either never be run in a mode in which it uses the full display area or must be programmed from the outset to include support for two modes of operation-one in which it renders graphics to only a portion of a display area and another in which it renders graphics to the entire display area.

Each of the foregoing methods requires the game developer to anticipate that the game will be run in a shared display area along with in-game advertising prior to release and to program the game accordingly to accommodate this feature. If the feature is not programmed into the game prior to release, then to add such functionality would require modifying and recompiling the source code after release. However, this may not be possible or commercially feasible in all cases. For example, the party wishing to modify the source code to accommodate this particular type of in-game advertising may not have access to the source code. As another example, multiple instances of the game may already have been purchased and installed by multiple end users.

What is needed, then, is a system, method and computer program product that enables a software application, such as a video game application, to render application-related graphics content to one portion of a display area and advertising content to a second portion of the same display area, even though the application was not originally programmed to support such functionality. Implementing the desired system, method and computer program product should not require modifying and recompiling the original application code or require any other changes to binary or data files associated with the original application. This allows the desired results to be achieved without developer intervention and on games that have been already provisioned and distributed to end-users machines.

US 2007/0143603 discloses a dynamic watermarking facility in which wrapper code intercepts a document rendering call from a calling application to a rendering engine. The wrapper code retrieves a watermark definition from a server and applies the watermark in rendering the document.

### BRIEF SUMMARY OF THE INVENTION

The invention provides a method for dynamically modifying graphics content according to claim 1, and a system according to claim 17.

Embodiments of the invention provide a means by which a software application, such as a video game application, may be enhanced to render application-related graphics content to one portion of a display area and additional graphics content, such as advertising content to a second portion of the same display area, even though the application was not originally programmed to support such functionality. In one embodiment of the present invention, implementing this enhancement does not require modifying and recompiling the original application code.

In particular, a method for dynamically modifying graphics content associated with an executing software application is provided. In accordance with the method, one or more function calls issued by the software application are intercepted. The one or more function calls issued by the software application are configured to cause graphics content associated with the software application, such as a scene associated with a video game application, to be rendered to a display area. Responsive to the interception of the one or more function calls from the software application, one or more function calls are issued that are configured to cause the graphics content associated with the software application to be rendered to a first portion of the display area. The first portion of the display area is smaller than the display area. Additional graphics content, such as advertising content, is rendered into a second portion of the display area. The second portion of the display area may be either overlapping or non-overlapping with respect to the first portion of the display area.

A computer program product is also provided. The computer program product comprises a computer-readable medium having computer program logic recorded thereon for enabling a processing unit to dynamically modify graphics content rendered by an executing software application. The computer program logic includes first means, second means, and third means. The first means enables the processing unit to intercept one or more function calls issued by the software application. The one or more function calls issued by the software application are configured to cause graphics content associated with the software application, such as a scene associated with a video game application, to be rendered to a display area. The second means enable the processing unit to issue one or more function calls responsive to intercepting the one or more function calls from the software application. The one or more function calls issued by the second means are configured to cause the graphics content associated with the software application to be rendered to a first portion of the display area. The first portion of the display area is smaller than the display area. The third means enable the processing unit to render additional graphics content, such as advertising content, into a second portion of the display area. The second portion of the display area may be either overlapping or non-overlapping with respect to the first portion of the display area.

A system is further provided. The system includes a computer system and a server communicatively connected to the computer system. The computer system is configured to dynamically resize a scene associated with an executing application so that the scene occupies only a first portion of a display area of a display device. The server is configured to serve graphics content, such as advertising content, to the computer system. The computer system is further configured to render the graphics content to a second portion of the display area of the display device. The second portion of the display area may be either overlapping or non-overlapping with respect to the first portion of the display area.

Further features and advantages of the invention, as well as the structure and operation of various embodiments of the invention, are described in detail below with reference to the accompanying drawings. It is noted that the invention is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form part of the specification, illustrate the present invention and, together with the description, further serve to explain the principles of the invention and to enable a person skilled in the relevant art(s) to make and use the invention.

FIG. 1 depicts a display area that has been partitioned into a game display portion for displaying scenes rendered by a video game application and an advertising display portion for displaying advertising content.

FIG. 2 depicts software components of a computer system in accordance with an embodiment of the present invention.

FIG. 3 illustrates a conventional software architecture for a personal computer (PC) that includes graphics functions for rendering and displaying graphics content.

FIG. 4 illustrates a software architecture of a PC that includes emulated versions of graphics functions for rendering and displaying graphics content.

FIG. 5 depicts a flowchart of a method for dynamically modifying graphics content rendered by an executing software application in accordance with an embodiment of the present invention.

FIG. 6 and FIG. 7 depict flowcharts corresponding to a first specific method for performing the general method of the flowchart depicted in FIG. 5.

FIG. 8 depicts an example display area to which graphics content has been presented in accordance with an embodiment of the present invention.

FIG 9 and FIG. 10 depict flowcharts corresponding to another specific method for performing the general method of the flowchart depicted in FIG. 5.

FIG. 11 depicts a flowchart corresponding to yet another specific method for performing the general method of the flowchart depicted in FIG. 5.

FIG. 12 depicts a flowchart corresponding to still another specific method for performing the general method of the flowchart depicted in FIG. 5.

FIG. 13 depicts software components of a system configured to dynamically resize graphics content rendered by a software application and to dynamically reposition a pointer image associated with the application-related graphics content.

FIG. 14 depicts a flowchart of a method for repositioning a pointer image within a display area to account for the resizing of application-related graphics content in accordance with an embodiment of the present invention.

FIG. 15 depicts an exemplary computer system that may be used to implement an embodiment of the present invention.

The features and advantages of the present invention will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION OF THE INVENTION

### A. Example Software Components of a System in Accordance with an Embodiment of the Present Invention

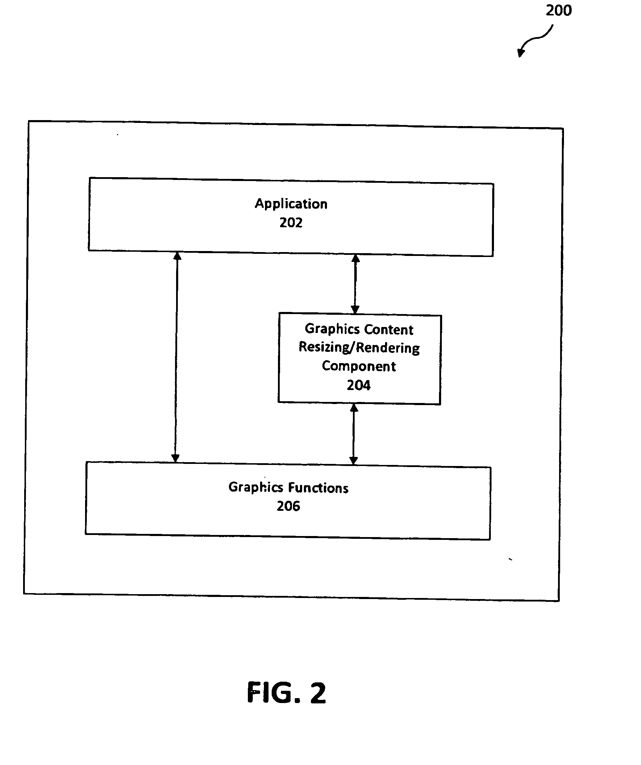

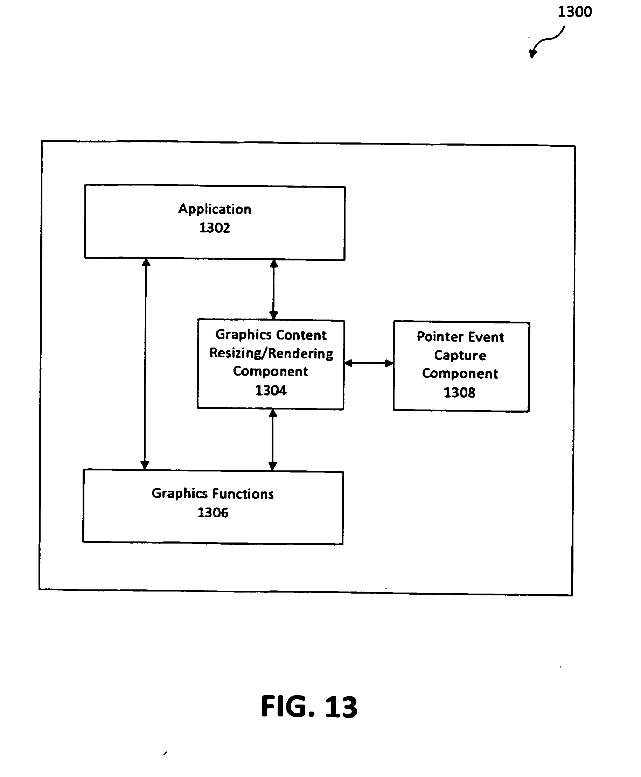

FIG. 2 depicts software components of a computer system 200 in accordance with an embodiment of the present invention. As shown in FIG. 2, system 200 includes an application 202, a graphics content resizing/rendering component 204, and graphics functions 206. It is to be understood that each of these software components is stored in memory within or accessible by computer system 200 and is configured to be executed by hardware components of computer system 200. Example hardware components of computer system 200 are described in detail below in reference to FIG. 13.

Application 202 is a software application, such as a video game application, that is executed by computer system 200. Graphics functions 206 are software functions of computer system 200 that are accessible to application 202 during run-time and that assist application 202 in rendering application-related graphics information to a display within computer system 200. Graphics functions 206 may comprise, for example, one or more functions of an application programming interface (API) such as Microsoft® DirectX® or OpenGL®. Graphics content resizing/rendering component 204 is a software component that is installed on computer system 200 prior to execution of application 202. Graphics content resizing/rendering component 204 may be installed on computer system 200 together with application 202, or independent of it.

Application 202 is programmed such that, during execution, it issues function calls to graphics functions 206. The interaction of application 202 with graphics functions 206 is well-known in the art. However, in accordance with an embodiment of the present invention, certain function calls issued by application 202 are intercepted by graphics content resizing/rendering component 204. In response to intercepting these function calls, graphics content resizing/rendering component 204 issue modified versions of the intercepted function calls and/or new function calls to graphics functions 206.

As will be discussed in more detail herein, graphics content resizing/rendering component 204 is configured to intercept one or more function calls that are issued by application 202 to cause application-related graphics content to be rendered to a display area of a display device. Graphics content resizing/rendering component 204 is further configured to issue modified versions of the intercepted function calls and/or new function calls to cause the graphics content being rendered to the display area to be resized such that the graphics content is rendered to only a first portion of the display area, wherein the first portion of the display area is —— smaller than the display area. Additionally, graphics content resizing/rendering component 204 is configured to issue new function calls that cause additional graphics content, such as one or more advertisements, to be rendered to one or more additional portions of the display area. Each of the additional portion(s) of the display area may be either overlapping or non-overlapping with respect to the first portion of the display area.

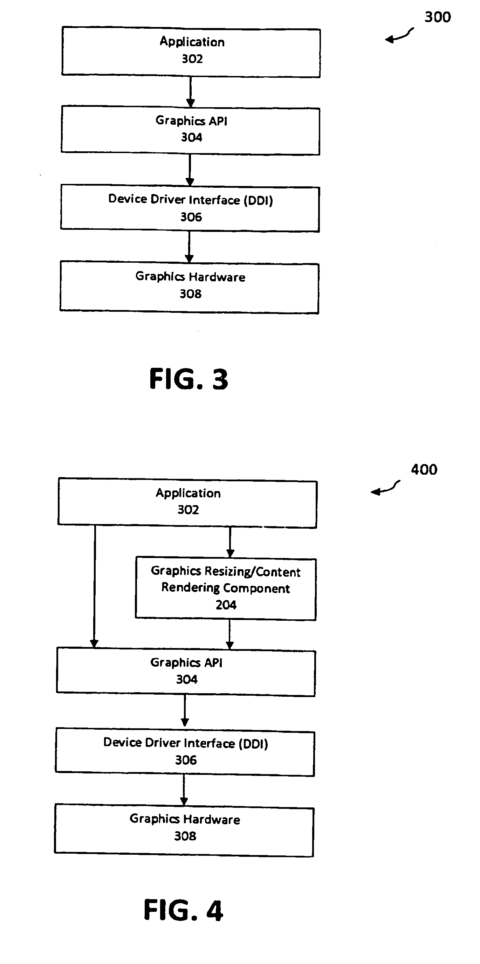

In one implementation of the present invention, in order to facilitate interception of function calls, graphics content resizing/rendering component 204 comprises one or more emulated versions of certain graphics functions 206. A particular example of the emulation of graphics functions 206 will now be described with reference to FIGS. 3 and 4.

FIG. 3 illustrates a conventional software architecture 300 for a personal computer (PC). As shown in FIG. 3, software architecture 300 includes an application 302 executing on the PC. The PC may be, for example, a Microsoft® Windows®-based PC, and the application may be, for example, a 32-bit Microsoft® Windows® application.

During execution, application 302 issues function calls to a graphics API 304 in a well-known manner. Graphics API 304 comprises a series of libraries that are accessible to application 302 in PC memory and that include functions that may be called by application 302 for rendering and displaying graphics information. Graphics API 304 may be, for example, a Microsoft® Direct3D® API or an OpenGL® API. In response to receiving the function calls from application 302, graphics API 304 determines if such functions can be executed by graphics hardware 308 within the PC. If so, graphics API 304 issues commands to a device driver interface (DDI) 306 for graphics hardware 308. DDI 306 then processes the commands for handling by the graphics hardware 308.

In contrast to the conventional software architecture illustrated in FIG. 3, FIG. 4 illustrates a software architecture 400 that includes emulated graphics libraries in accordance with an embodiment of the present invention. As shown in FIG. 4, graphics content resizing/rendering component 204 has been "inserted" between application 302 and graphics API 304. This may be achieved by emulating one or more graphics libraries within graphics API 304. As a result, certain function calls issued by application 302 are received by graphics content resizing/rendering component 204 rather than graphics API 304. Graphics content resizing/rendering component 204 then issues modified versions of the intercepted function calls and/or new function calls to graphics API 304, where they are handled in a conventional manner.

Depending on the operating system, emulating a genuine graphics API can be achieved in various ways. One method for emulating a genuine graphics API is file replacement. For example, since both DirectX® and OpenGL® APIs are dynamically loaded from a file, emulation can be achieved by simply replacing the pertinent file (for example, OpenGL.dll for OpenGL® and d3d*X*.dll for DirectX® where *X* is the DirectX® version). Alternatively, the DLL can be replaced with a stub DLL having a similar interface that implements a pass-through call to the original DLL for all functions but the functions to be intercepted.

An alternative method for intercepting function calls to the graphics API is to use the Detours hooking library published by Microsoft® Corporation of Redmond, Washington. Hooking may also be implemented at the kernel level. Kernel-level hooking may include the use of an operating system (OS) ready hook that generates a notification when a particular API is called. Another technique is to replace existing OS routines by changing a pointer in an OS API table to a hook routine pointer, and optionally chaining the call to the original OS routine before and/or after the hook logic execution. Another possible method is an API-based hooking technique that injects a DLL into any process that is being loaded by setting a global system hook or by setting a registry key to load such a DLL. Such injection is performed only to have the hook function running in the address space. While the OS loads such a DLL, a DLL initialization code changes a desired DLL dispatch table. Changing the table causes a pointer to the original API implementation to point to the interception DLL implementation for a desired API, thus hooking the API. Note that the above-describing hooking techniques are presented by way of example and are not intended to limit the present invention. Other methods and tools for intercepting function calls to graphics APIs are known to persons skilled in the relevant art(s).

### B. Example Methods for Dynamically Modifying Graphics Content Rendered by an Executing Software Application in Accordance with Embodiments of the Present Invention

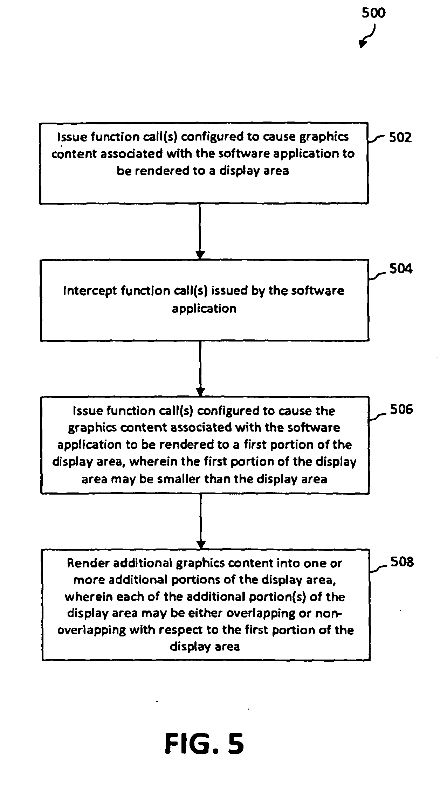

FIG. 5 depicts a flowchart 500 of a method for dynamically modifying graphics content rendered by an executing software application in accordance with an embodiment of the present invention. The method of flowchart 500 is described herein by way of example only and is not intended to limit the present invention. Furthermore, although the steps of flowchart 500 will described herein with reference to the software components of system 200 of FIG. 2, persons skilled in the relevant art(s) will readily appreciate that the method need not be implemented using such components.

The method of flowchart 500 begins at step 502, in which application 202 issues one or more function calls that are configured to cause graphics content associated with the application to be rendered to a display area on a display device. Depending on the implementation, the display area may be defined such that it occupies the entire screen of a display device or only a portion thereof. In accordance with one implementation, application 202 comprises a video game application and the graphics content associated with application 202 comprises a 2D or 3D scene associated with the game.

At step 504, graphics content resizing/rendering component 204 intercepts the function call(s) issued by application 202. Various methods by which graphics content resizing/rendering component 204 may intercept such function call(s), such as various types of API emulation and hooking, are discussed above in Section A, and thus will not be repeated here for the sake of brevity.

At step 506, responsive to intercepting the function call(s) issued by application 202, graphics content resizing/rendering component 204 issues one or more modified versions of the intercepted function call(s) and/or one or more new function calls to cause the graphics content associated with the software application to be rendered to a first portion of the display area. The first portion of the display area is —— smaller than the display area.

At step 508, graphics content resizing/rendering component 204 renders additional graphics content into one or more additional portions of the display area. Each of the additional portion(s) of the display area may be either overlapping or non-overlapping with respect to the first portion of the display area. In one implementation, the additional graphics content comprises one or more advertisements. The additional graphics content may be stored locally with respect to system 200 or may be made available by a remote entity via a network, such as the Internet. For example, a remote entity such as an ad server may make graphics-based advertising content available to graphics content resizing/rendering component 204 via an Internet connection. However, these examples are not intended to limit the present invention and any type of graphics content from any source may be rendered into the one or more additional portions of the display area in step 508.

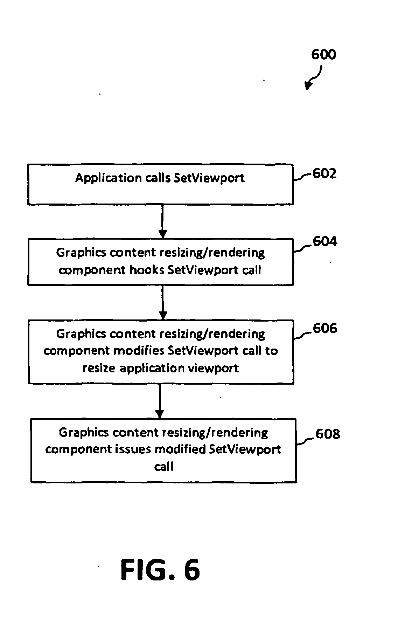

Specific methods for implementing the general method of flowchart 500 of FIG. 5 in a computer system that uses Microsoft® Direct3D® graphics libraries will now be described with reference to FIGS. 6 through 12. These specific methods are presented herein by way of example only, and are not intended to limit the present invention.

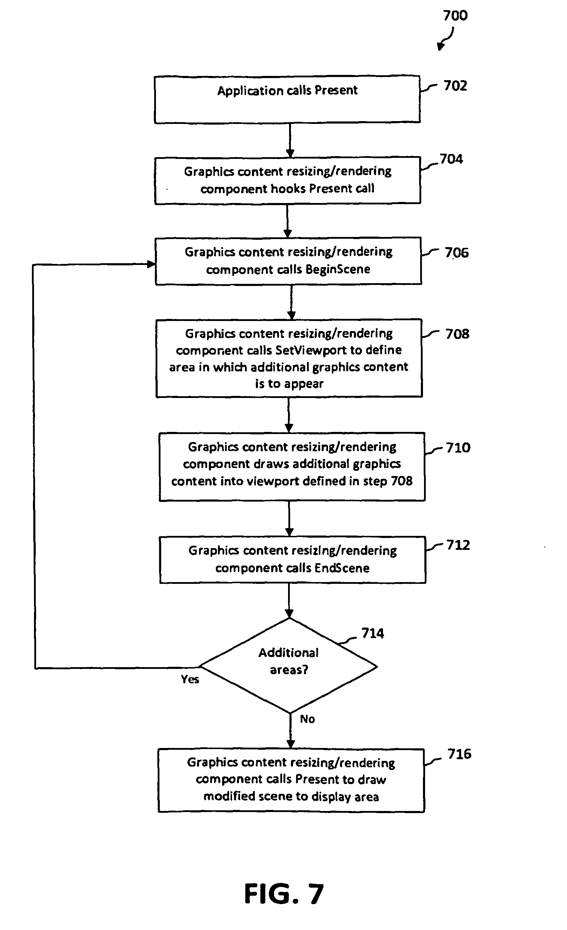

FIGS. 6 and 7 illustrate flowcharts 600 and 700, respectively, of a first specific method for performing the general method of flowchart 500. Flowchart 600 describes steps that occur when application 202 issues a Direct3D® SetViewport call to specify the size and location of a rectangular viewport to which a scene associated with application 202 is to be rendered. The issuance of the SetViewport call is shown at step 602.

At step 604, graphics content resizing/rendering component 204 hooks the SetViewport call. At step 606, graphics content resizing/rendering component 204 modifies the SetViewport call to change the size and location of the rectangular viewport to which the scene is to be rendered. The size and location may be changed such that the rectangular viewport covers only a portion of the viewport defined by the original SetViewport call. At step 608, graphics content resizing/rendering component 204 issues the modified SetViewport call to graphics functions 206, where it is handled in a conventional manner.

Subsequent to the performance of the steps of flowchart 600 of FIG. 6, application 202 performs steps necessary to render a scene to the viewport defined by the modified SetViewport call. These steps include first issuing a Direct3D® BeginScene call, then issuing a number of Direct3D® function calls to cause the scene to be rendered (such as SetTexture, DrawPrimitive, or various other Direct3D® function calls), and finally issuing a Direct3D® EndScene call. After this, application 202 issues a Direct3D® Present call to cause the scene to be presented from a buffer to a display device.

Flowchart 700 describes steps that occur when application 202 issues the Present call. The issuance of the Present call by application 202 is shown at step 702. At step 704, graphics content resizing/rendering component 204 hooks the Present call. At step 706 through 712, responsive to hooking the Present call, graphics content resizing/rendering component 204 performs steps to render additional graphics content into a new viewport. In particular, at step 706, graphics content resizing/rendering component 204 issues a BeginScene call. At step 708, graphics content resizing/rendering component 204 issues a SetViewport call to define a new viewport to which additional graphics content is to be rendered. This new viewport may be either overlapping or non-overlapping with respect to the viewport defined in step 608 of FIG. 6. At step 710, graphics content resizing/rendering component 204 draws the additional graphics content into the viewport defined in step 708. At step 712, graphics content resizing/rendering component 204 issues an EndScene call.

At decision step 714, it is determined whether an additional area is needed to display further additional graphics content. If so, then steps 706 through 712 are repeated to create another viewport and to render the further additional graphics content into the new viewport. However, if no additional area is needed, then graphics content resizing/rendering component 204 calls the Present function to cause the modified scene, which now includes at least one additional viewport including additional graphics content, to be presented to the display area.

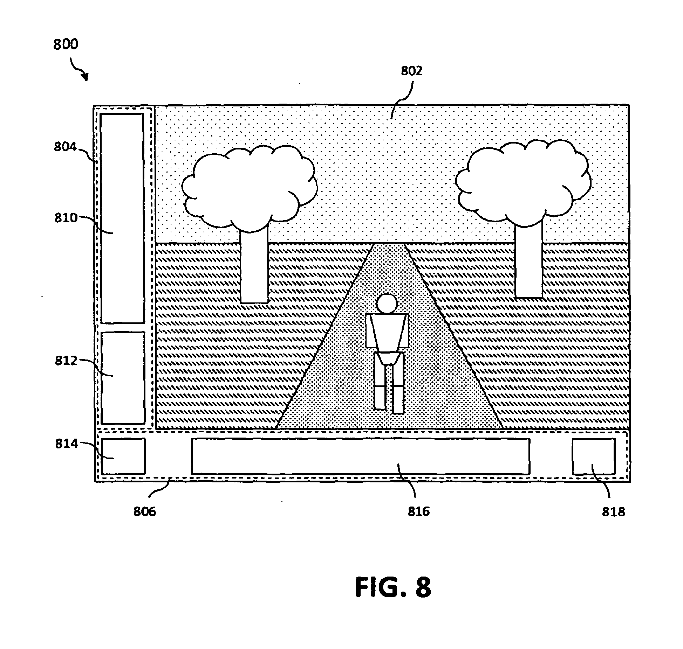

FIG. 8 depicts an example display area 800 to which graphics content has been presented in accordance with the method of flowcharts 600 and 700. As shown in FIG. 8, an application-related scene is rendered to a rectangular viewport 802 within display area 800 rather than to the entirety of display area 800. This is due to the modification of an original SetViewport call issued by application 202, as described above in reference to flowchart 600 of FIG. 6. As also shown in FIG. 8, additional graphics content has been rendered to two additional viewports that are located within display area 800. In particular, additional graphics elements 810 and 812 have been rendered to a first additional viewport 804 and additional graphics elements 814, 816 and 818 have been rendered to a second additional viewport 806. The creation of these additional viewports and the drawing of graphics content thereto occur responsive to the hooking of a Present call issued by application 202 as described above in reference to flowchart 700 of FIG. 7. The application-related scene rendered to viewport 802 may comprise a scene associated with a video game application and the additional graphics elements rendered to viewports 804 and 806 may comprise advertisements, although the invention is not so limited.

Persons skilled in the relevant art(s) will appreciate that the foregoing methods of flowcharts 600 and 700 may be modified to conform to a manner in which application 202 is programmed. For example, application 202 may not be programmed to issue a SetViewport call (as described above in reference to step 602 of flowchart 600) but may instead use a default viewport that occupies the entirety of a display area. In this case, rather than hooking a SetViewport call issued by application 202, graphics content resizing/rendering component 204 may, for example, hook a Direct3D® CreateDevice call and then, responsive to hooking the CreateDevice call, issue a SetViewport function call that defines a rectangular portion of the display area to which a scene associated with application 202 is to be rendered.

In another alternative implementation of flowcharts 600 and 700, graphics content resizing/rendering component 204 does not define a new viewport for displaying additional graphics content during step 708, but instead defines the new viewport responsive to the hooking of the original SetViewport function call in step 604. In a still further alternative implementation, graphics content resizing/rendering component 204 defines the new viewport responsive to the hooking of a CreateDevice function call by application 202.

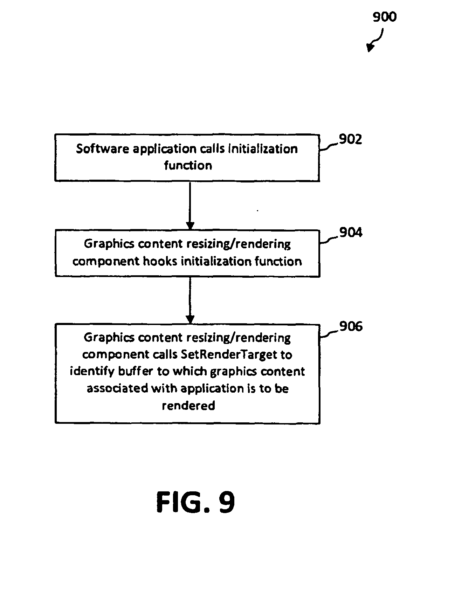

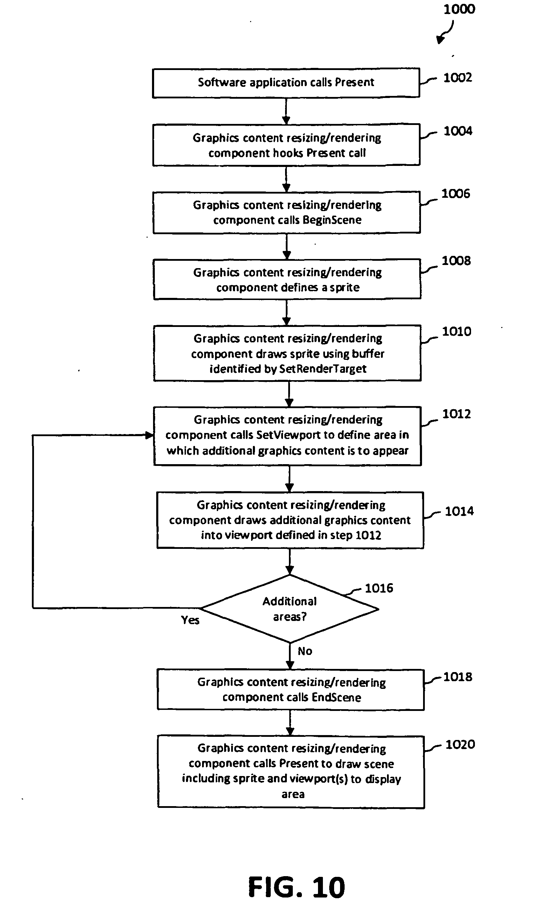

FIGS. 9 and 10 illustrate flowcharts 900 and 1000, respectively, of another specific method for performing the general method of flowchart 500. Flowchart 900 describes steps that occur when application 202 issues a Direct3D® initialization call, such as a Direct3DCreate call. The issuance of the initialization call is shown at step 902.

At step 904, graphics content resizing/rendering component 204 hooks the initialization call. At step 906, graphics content resizing/rendering component 204 issues a Direct3D® SetRenderTarget call to cause graphics content associated with the application to be rendered to a buffer identified by graphics content resizing/rendering component 204 rather than to a location identified by application 202 or to a default location.

Subsequent to the performance of the steps of flowchart 900 of FIG. 9, application 202 performs steps necessary to render a scene to the buffer identified by the SetRenderTarget call (without being aware it is rendering to the buffer identified by the SetRenderTarget call). These steps include first issuing a Direct3D® BeginScene call, then issuing a number of Direct3D® function calls to cause the scene to be rendered (such as SetTexture, DrawPrimitive, or various other Direct3D® function calls), and finally issuing a Direct3D® EndScene call. After this, application 202 issues a Direct3D® Present call to cause the scene to be presented from a buffer to the display area.

Flowchart 1000 describes steps that occur when application 202 issues the Present call. The issuance of the Present call by application 202 is shown at step 1002. At step 1004, graphics content resizing/rendering component 204 hooks the Present call. At step 1006, responsive to hooking the Present call, graphics content resizing/rendering component 204 issues a BeginScene call. At step 1008, graphics content resizing/rendering component 204 defines a rectangular sprite that may have smaller dimensions than the dimensions of the rectangular display area. At step 1010, graphics content resizing/rendering component 204 issues a Direct3D® DrawSprite call to cause a sprite having the dimensions defined in step 1008 to be drawn to a specified location in the display area using the texture identified by the SetRenderTarget call issued in step 906 of flowchart 900 of FIG. 9.

At step 1012 through 1016, graphics content resizing/rendering component 204 performs steps to render additional graphics content into a new viewport within the display area. In particular, at step 1012, graphics content resizing/rendering component 204 issues a SetViewport call to define a viewport within the display area to which additional graphics content is to be rendered. This new viewport may be either overlapping or non-overlapping with respect to the sprite drawn to the display area in step 1008. At step 1014, graphics content resizing/rendering component 204 draws the additional graphics content into the viewport defined in step 1012. At decision step 1016, it is determined whether an additional area within the display area is needed to display further additional graphics content. If so, then steps 1012 through 1014 are repeated to create another viewport within the display area and to render the further additional graphics content into the new viewport.

However, if no additional area is needed, then graphics content resizing/rendering component 204 issues an EndScene call as shown at step 1018. At step 1020, graphics content resizing/rendering component 204 calls the Present function to cause the modified scene, which now includes the sprite drawn in step 1008 and at least one viewport including additional graphics content, to be presented to the display area.

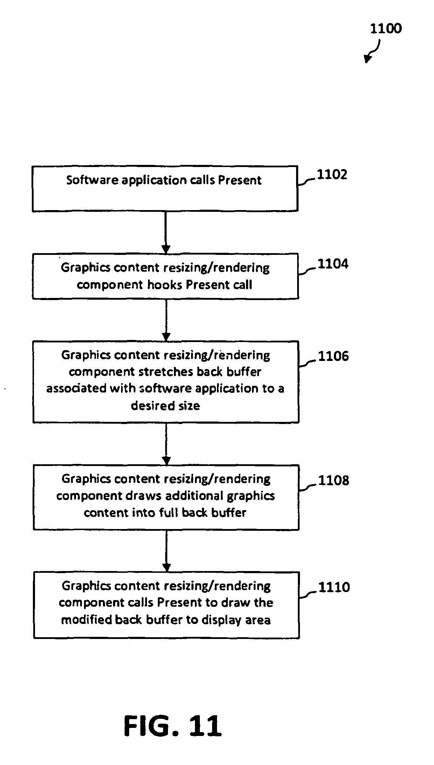

FIG. 11 illustrates a flowchart 1100 of a further specific method for performing the general method of flowchart 500. Flowchart 1100 describes steps that occur when application 202 issues a Direct3D® Present call. The issuance of the Present call is shown at step 1102. At the time of the issuance of the Present call, a rendered scene associated with application 202 is ready to be presented into the display area.

At step 1104, graphics content resizing/rendering component 204 hooks the Present call. At step 1106, responsive to hooking the Present call, graphics content resizing/rendering component 204 obtains a back buffer associated with application 202 and resizes it by stretching it to another render target having a desired size. The new render target is then used as the back buffer for application 202 and graphics content resizing/rendering component 304 to render the additional content and/or advertising.

At step 1106, graphics content resizing/rendering component 204 draws the additional graphics content into the new render target/back buffer. Finally, at step 1108, graphics content resizing/rendering component 204 calls Present to draw the modified back buffer to the display area.

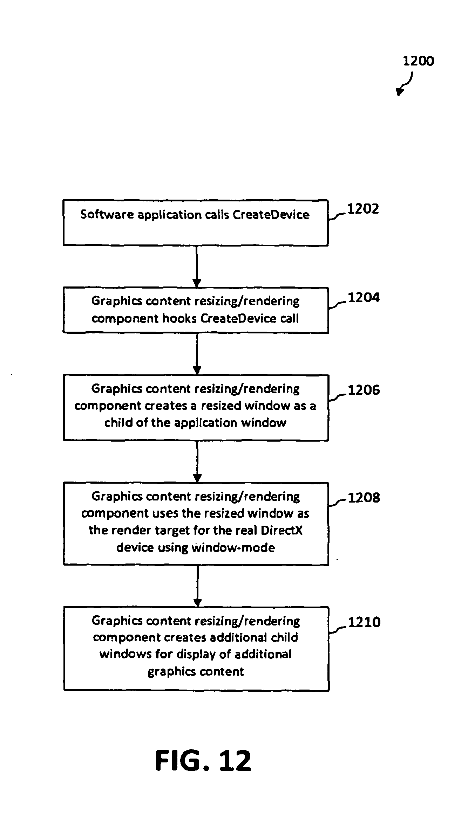

FIG. 12 illustrates a flowchart 1200 of a further specific method for performing the general method of flowchart 500. Flowchart 1200 describes steps that occur when application 202 issues a Direct3D® CreateDevice call. Application 202 issues the CreateDevice call to create a new graphics device and to specify a window in which the new graphics device should render its graphics. The issuance of the CreateDevice call is shown at step 1202.

At step 1204, graphics content resizing/rendering component 204 hooks the CreateDevice call. At step 1206, responsive to hooking the CreateDevice call, graphics content resizing/rendering component 204 creates an alternate window of a modified size which is configured to be a child of the window specified for application 202. As a result, application 202 executes in a window mode rather than a full-screen mode. At step 1208, graphics content resizing/rendering component 204 uses the newly-created window as the render target for the real DirectX device. At step 1210, graphics content resizing/rendering component 204 creates one or more additional windows within the remaining portions of the display area for the purpose of rendering additional graphics content. These additional windows may be used for example for the purpose of rendering advertising content.

### C. Dynamic Pointer Image Repositioning in Accordance with an Embodiment of the Present Invention

As described above, an embodiment of the present invention dynamically resizes graphics content rendered by a software application, such as a video game application, to facilitate the rendering of additional graphics content, such as advertisements, to a portion of a display area that would otherwise have been occupied by the application-related graphics content. When such a technique is applied to a software application that allows a user to interact with objects within the display area using a pointer device (e.g., a mouse, keyboard, or any other I/O device capable of controlling a pointer), special care must be taken to ensure that the pointer image is displayed in the appropriate position and that the application receives pointer coordinates back from I/O elements in a position that will allow regular control of the application by the user. In particular, special care must be taken to ensure that the pointer image is displayed in an appropriate position within the resized application scene as opposed to the position at which the pointer image would normally have been displayed prior to resizing.

For applications that render the pointer image along with all the other objects rendered within a scene, the position of the pointer image is automatically adjusted when a scene rendered by the application is resized in accordance with one of the foregoing methods. However, when the display of the pointer image is managed by an entity outside of the application, such as by an operating system, a separate method must be used to reposition the pointer image to adjust for the resizing of the application scene. Such a method will now be described.

FIG. 13 depicts the software components of a system 1300 configured to dynamically resize graphics content rendered by a software application and to dynamically reposition a pointer image associated with the application-related graphics content. As shown in FIG. 13, system 1300 includes an application 1302, graphics content resizing/rendering component 1304, and graphics functions 1306. These elements function in substantially the same manner as application 202, graphics content resizing/rendering component 204, and graphics function 206, respectively, to dynamically resize graphics content associated with application 1302.

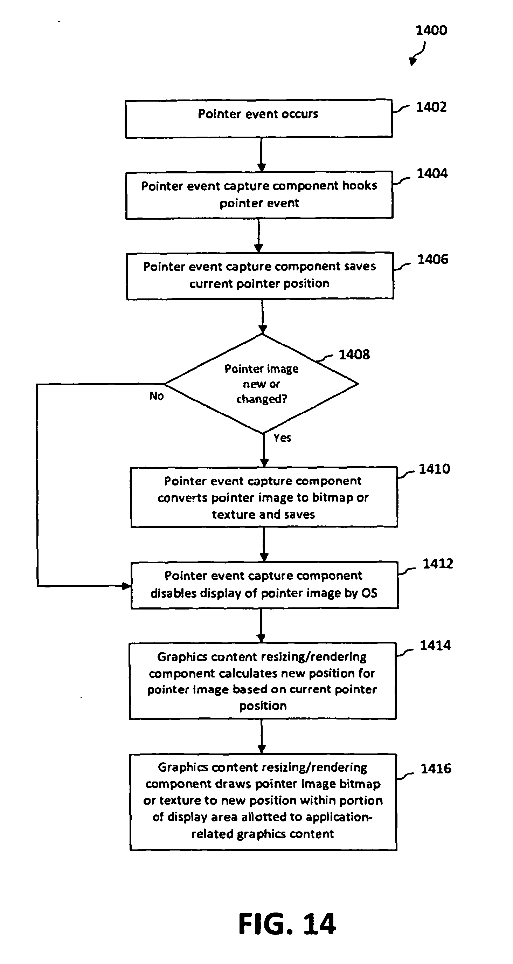

As further shown in FIG. 13, system 1300 also includes a pointer event capture component 1308. As will be described in more detail below, pointer event captures component 1308 is configured to operate in conjunction with graphics content resizing/rendering component 1304 to reposition a pointer image within a display area to account for the resizing of the application-related graphics content. The manner in which these components operate to reposition the pointer image will now be described in reference to flowchart 1400 of FIG. 14.

The method of flowchart 1400 begins at step 1402, in which a pointer event occurs. The pointer event may comprise, for example, a function call issued by an operating system within system 1300. The function call may be issued responsive to the receipt of input from a pointing device within or attached to system 1300.

At step 1404, pointer event capture component 1308 captures the pointer event. To this end, pointer event capture component 1308 may include a low-level pointer hook. Where the operating system is a Microsoft® Windows® operating system, the pointer hook may be set using a function such as SetWindowsHookEx. However, this approach is described by way of example only, and is not intended to be limiting. Many other techniques well-known to persons skilled in the relevant art(s) may be used to capture the pointer event.

Responsive to the capture of the pointer event, pointer event capture component performs several functions. In particular, at step 1406, pointer event capture component 1308 saves the current position of the pointer image as determined by the operating system. At decision step 1408, pointer event capture component 1308 determines if the pointer image maintained by the operating system is new or has changed as a result of the pointer event. If the pointer image is not new and has not changed as a result of the pointer event, then processing proceeds to step 1412. However, if the pointer image is new or has changed as a result of the pointer event, then pointer event capture component 1308 converts the pointer image to a bitmap or texture and saves it as shown at step 1410. This may be achieved in a Microsoft® Windows® environment, for example, by capturing a mouse cursor using an HCURSOR handle and obtaining an associated bitmap from the device context (DC) of the system. Processing then proceeds to step 1412, during which pointer event capture component 1308 disables the normal display of the pointer image by the operating system.

At step 1414, graphics content resizing/rendering component 1304 uses the current position of the pointer image that was saved by pointer event capture component 1308 to calculate a new position for the pointer image within the resized application-related scene. At step 1416, graphics content resizing/rendering component 1304 then draws the bitmap or texture representation of the pointer image saved by pointer event capture component 1308 to the new position within the resized application-related scene. Steps 1414 and 1416 may be performed by graphics resizing/rendering component 1304 responsive to intercepting a Present call from application 1302.

In one embodiment of the present invention, pointer event capture component 1308 is configured to perform steps 1406 through 1412 as described above only when it is determined that the captured pointer event is a pointer movement event.

The result of the foregoing method is that the display of a pointer image associated with application 1302 is bounded with the resized area defined by graphics content resizing/rendering component 1304 for displaying an application-related scene.

An alternative embodiment of the present invention includes the foregoing functionality but in another mode of operation also supports pointer-based interaction with the additional graphics content rendered by graphics content resizing/rendering component 1304. Such additional graphics content may comprise, for example, an interactive or "clickable" advertisement.

In accordance with this further embodiment, responsive to a user providing some predetermined input (such as pressing a particular combination of keys), graphics content resizing/rendering component 1304 enters an "interactive" mode in which the original position of the pointer image is not translated to a new position in the manner described above. In addition, the pointer image presented to the user may optionally be changed from what would have normally been presented to the user responsive to the user providing the predetermined input. This new pointer image may be used to indicate to the user that he/she has entered a different mode of interaction. While in the aforementioned interactive mode, when pointer event capture component 1308 captures a pointer movement event, graphics content resizing/rendering component 1304 displays the pointer image in its original position, without conversion to a new pointer image location. Furthermore when pointer event capture component 1308 captures a pointer click event, graphics content resizing/rendering component 1304 notifies an additional component and, based on this notification, the additional component performs one or more additional functions. For example, in an embodiment in which the additional component is an Internet browser, the one or more additional functions may include presenting a Web page in a new window that pertains to the advertised product or service.

### D. Example Computer System

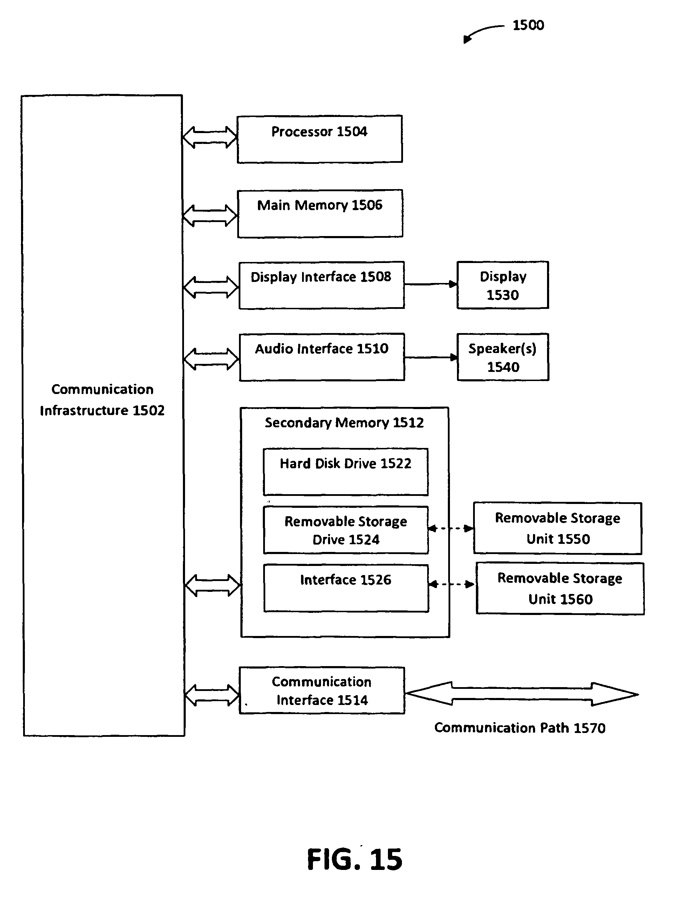

FIG. 15 depicts an exemplary computer system 1500 that may be used to implement computer system 200 of FIG. 2 or computer system 1300 of FIG. 13. Computer system 1500 may comprise a general-purpose computing device, such as a conventional personal computer, an interactive entertainment computer or electronic device, such as a video game console, a cellular phone, personal digital assistant, or any other device that is capable of executing software applications and displaying associated application-generated graphics information to an end-user. Computer system 1500 is configured to perform the functions of system 200 of FIG. 2 or computer system 1300 of FIG. 13 as described elsewhere herein.

As shown in FIG. 15, example computer system 1500 includes a processor 1504 for executing software routines. Although a single processor is shown for the sake of clarity, computer system 1500 may also comprise a multi-processor system. Processor 1504 is connected to a communication infrastructure 1502 for communication with other components of computer system 1500. Communication infrastructure 1502 may comprise, for example, a communications bus, cross-bar, or network.

Computer system 1500 further includes a main memory 1506, such as a random access memory (RAM), and a secondary memory 1512. Secondary memory 1512 may include, for example, a hard disk drive 1522 and/or a removable storage drive 1524, which may comprise a floppy disk drive, a magnetic tape drive, an optical disk drive, or the like. Removable storage drive 1524 reads from and/or writes to a removable storage unit 1550 in a well known manner. Removable storage unit 1550 may comprise a floppy disk, magnetic tape, optical disk, or the like, which is read by and written to by removable storage drive 1524. As will be appreciated by persons skilled in the relevant art(s), removable storage unit 1550 includes a computer usable storage medium having stored therein computer software and/or data.

In an alternative implementation, secondary memory 1512 may include other similar means for allowing computer programs or other instructions to be loaded into computer system 1500. Such means can include, for example, a removable storage unit 1560 and an interface 1526. Examples of a removable storage unit 1560 and interface 1526 include a program cartridge and cartridge interface (such as that found in video game console devices), a removable memory chip (such as an EPROM or PROM) and associated socket, and other removable storage units 1560 and interfaces 1526 which allow software and data to be transferred from the removable storage unit 1560 to computer system 1500.

Computer system 1500 also includes at least one communication interface 1514. Communication interface 1514 allows software and data to be transferred between computer system 1500 and external devices via a communication path 1570. In particular, communication interface 1514 permits data to be transferred between computer system 1500 and a data communication network, such as a public data or private data communication network. Examples of communication interface 1514 can include a modem, a network interface (such as Ethernet card), a communication port, and the like. Software and data transferred via communication interface 1514 are in the form of signals which can be electronic, electromagnetic, optical or other signals capable of being received by communication interface 1514. These signals are provided to the communication interface via communication path 1570.

As shown in FIG. 15, computer system 1500 further includes a display interface 1508 which performs operations for rendering images to an associated display 1530 and an audio interface 1510 for performing operations for playing audio content via associated speaker(s) 1540.

As used herein, the term "computer program product" may refer, in part, to removable storage unit 1550, removable storage unit 1560, a hard disk installed in hard disk drive 1522, or a carrier wave carrying software over communication path 1570 (wireless link or cable) to communication interface 1514. A computer useable medium can include magnetic media, optical media, or other recordable media, or media that transmits a carrier wave or other signal. These computer program products are means for providing software to computer system 1500.

Computer programs (also called computer control logic) are stored in main memory 1506 and/or secondary memory 1512. Computer programs can also be received via communication interface 1514. Such computer programs, when executed, enable the computer system 1500 to perform one or more features of the present invention as discussed herein. In particular, the computer programs, when executed, enable the processor 1504 to perform features of the present invention. Accordingly, such computer programs represent controllers of the computer system 1500.

Software for implementing the present invention may be stored in a computer program product and loaded into computer system 1500 using removable storage drive 1524, hard disk drive 1522, or interface 1526. Alternatively, the computer program product may be downloaded to computer system 1500 over communications path 1570. The software, when executed by the processor 1504, causes the processor 1504 to perform functions of the invention as described herein.

## Claims

1. A method for dynamically modifying graphics content associated with an executing software application (302), comprising:
intercepting (504) one or more first function calls issued by the software application (302), the one or more first function calls issued (502) by the software application being configured to cause graphics content associated with the software application to be rendered to the entirety of a display area;
responsive to intercepting the one or more first function calls from the software application, issuing (506) one or more second function calls configured to cause the graphics content associated with the software application to be rendered to a first portion of the display area that is smaller than the display area; and
rendering (508) additional graphics content into a second portion of the display area that is not encompassed by the first portion of the display area.

2. The method of claim 1, wherein the second portion of the display area is either overlapping or non-overlapping with respect to the first portion of the display area.

3. The method of claim 1, wherein the graphics content associated with the software application comprises a scene associated with a video game application.

4. The method of claim 1, wherein rendering (508) the additional graphics content into the second portion of the display area comprises rendering one or more advertisements into the second portion of the display area.

5. The method of claim 1, wherein intercepting (504) the one or more first function calls comprises intercepting a first function call configured to define a first viewport having a size and location corresponding to the size and location of the display area; and
wherein issuing (506) one or more second function calls comprises issuing a second function call configured to define the first viewport as having a size and location corresponding to the size and location of the first portion of the display area.

6. The method of claim 5, wherein rendering the additional graphics content into the second portion of the display area comprises:
intercepting a third function call configured to present a scene to a display, wherein the scene includes graphics content rendered to the first viewport;
issuing a fourth function call configured to define a second viewport having a size and location corresponding to the size and location of the second portion of the display area;
rendering the additional graphics content to the second viewport; and
issuing a fifth function call configured to present a scene to a display, wherein the scene includes the graphics content rendered to the first viewport and the additional graphics content rendered to the second viewport.

7. The method of claim 1, wherein the intercepting one or more first function calls comprises intercepting a first function call configured to create a graphics device; and
wherein issuing the one or more second function calls comprises issuing a second function call configured to define a first viewport to which the graphics content associated with the software application is to be rendered and issuing a third function call configured to define a second viewport to which the additional graphics content is to be rendered.

8. The method of claim 1, wherein intercepting the one or more first function calls comprises intercepting a first function call; and
wherein issuing the one or more second function calls comprises issuing a second function call configured to identify a buffer into which a scene associated with the software application is to be rendered.

9. The method of claim 8, wherein rendering the additional graphics content into the second portion of the display area comprises:
intercepting a third function call configured to present a scene to a display;
drawing the scene into the first portion of the display area using the buffer, the buffer representing a rendered scene associated with the software application;
issuing a fourth function call configured to define a viewport having a size and location corresponding to the size and location of the second portion of the display area;
rendering the additional graphics content to the second viewport; and
issuing a fifth function call configured to present a scene to a display, wherein the scene includes the scene drawn into the first portion of the display area and the additional graphics content rendered to the viewport.

10. The method of claim 1, wherein issuing the one or more second function calls configured to cause the graphics content associated with the software application to be rendered to the first portion of the display area comprises:
obtaining a back buffer associated with the software application; and
resizing the back buffer by stretching it to a render target having a desired size.

11. The method of claim 10, wherein rendering the additional graphics content into the second portion of the display area comprises:
rendering the additional graphics content into areas of the resized back buffer that are not occupied by the graphics content associated with the software application as a result of the resizing.

12. The method of claim 1, wherein issuing the one or more second function calls configured to cause the graphics content associated with the software application to be rendered to the first portion of the display area comprises:
creating a resized window as a child of a window associated with the software application; and
using the resized window as a render target.

13. The method of claim 12, wherein rendering the additional graphics content into the second portion of the display area comprises:
creating additional child windows for display of the additional graphics content.

14. The method of claim 1, further comprising:
intercepting one or more function calls configured to display a pointer image to a first position within the display area; and
drawing a representation of the pointer image to a second position within the display area, wherein the second position is within the first portion of the display area and is determined based on the first position.

15. The method of claim 14, further comprising:
responsive to intercepting the one or more function calls configured to display the pointer image to the first position within the display area, converting the pointer image to a bitmap or texture representation of the pointer image.

16. A computer program product comprising a computer-readable medium having computer program logic recorded thereon arranged to put into effect the method of any of claims 1-15.

17. A system, comprising:
a computer system (200) configured to dynamically resize a scene associated with an executing application so that the scene occupies only a first portion of a display area of a display device, the first portion of the display area being smaller than the display area; and
a server communicatively connected to the computer system and configured to serve graphics content to the computer system;
wherein the computer system is further configured to render the graphics content to a second portion of the display area of the display device that is not encompassed by the first portion of the display area.

18. The system of claim 17, wherein the graphics content comprises advertising content.

19. The system of claim 17 wherein the second portion of the display area is non-overlapping with respect to the first portion of the display area.

## Patentansprüche

1. Verfahren zum dynamischen Modifizieren von Grafikinhalten im Zusammenhang mit einer ausgeführten Softwareanwendung (302), umfassend:
Abfangen (504) von einem oder mehreren ersten Funktionsaufrufen, die von der Softwareanwendung (302) ausgegeben werden, wobei der eine oder die mehreren ersten Funktionsaufrufe, die von der Softwareanwendung ausgegeben werden (502) dazu ausgelegt sind, die Übertragung von Grafikinhalten im Zusammenhang mit der Softwareanwendung auf die gesamte Displayfläche zu bewirken;
Ausgeben (506) von einem oder mehreren zweiten Funktionsaufrufen als Reaktion auf das Abfangen des einen oder der mehreren ersten Funktionsaufrufe von der Softwareanwendung, um den mit der Softwareanwendung zusammenhängenden Grafikinhalt, auf einen ersten Bereich der Displayfläche, die kleiner als die Displayfläche ist, zu übertragen; und
Übertragen (508) von zusätzlichen Grafikinhalte auf einen zweiten Bereich der Displayfläche, die nicht von dem ersten Bereich der Displayfläche umfasst ist.

2. Verfahren nach Anspruch 1, wobei der zweite Bereich der Displayfläche zu dem ersten Bereich der Displayfläche entweder überlappend oder nicht überlappend ist.

3. Verfahren nach Anspruch 1, wobei der mit der Softwareanwendung zusammenhängende Grafikinhalt eine mit einer Videospielanwendung zusammenhängende Szene umfasst.

4. Verfahren nach Anspruch 1, wobei die Übertragung des zusätzlichen Grafikinhalts auf den zweiten Bereich der Displayfläche die Übertragung von einer oder mehreren Werbeeinblendungen in den zweiten Bereich der Displayfläche umfasst.

5. Verfahren nach Anspruch 1, wobei das Abfangen (504) des einen oder der mehreren ersten Funktionsaufrufe das Abfangen eines ersten Funktionsaufrufs umfasst, der zum Definieren eines Blickfelds ausgelegt ist, dessen Größe und Ort der Größe und dem Ort der Displayfläche entspricht; und
wobei das Ausgeben (506) des einen oder der mehreren zweiten Funktionsaufrufe das Ausgeben eines zweiten Funktionsaufrufs umfasst, der zum Definieren des zweiten Blickfelds ausgelegt ist, so dass dieses die Größe und die Position hat, die der Größe und der Position des ersten Bereichs der Displayfläche entspricht.

6. Verfahren nach Anspruch 5, wobei das Übertragen des zusätzlichen Grafikinhalts den zweiten Bereich der Displayfläche umfasst:
Abfangen eines dritten Funktionsaufrufs, der zum Darstellen einer Szene auf einem Display ausgelegt ist, wobei die Szene Grafikinhalte enthält, die auf das erste Blickfeld übertragen werden;
Ausgeben eines vierten Funktionsaufrufs, der zum Definieren eines zweiten Blickfelds ausgelegt ist, welches eine Größe und Position hat, die der Größe und Position des zweiten Bereichs der Displayfläche entspricht;
Übertragen des zusätzlichen Grafikinhalts auf das zweite Blickfeld; und
Ausgeben eines fünften Funktionsaufrufs, der zum Darstellen einer Szene auf einem Display ausgelegt ist, wobei die Szene den auf das erste Blickfeld übertragenen Grafikinhalt und den auf das zweite Blickfeld übertragenen Grafikinhalt enthält.

7. Verfahren nach Anspruch 1, wobei das Abfangen eines oder mehrerer erster Funktionsaufrufe das Abfangen eines ersten Funktionsaufrufs umfasst, der dazu ausgelegt ist, eine Grafikvorrichtung zu erzeugen; und
wobei das Ausgeben des ersten oder der mehreren zweiten Funktionsaufrufe das Ausgeben eines zweiten Funktionsaufrufs umfasst, der zum Definieren eines ersten Blickfelds ausgelegt ist, auf welches der mit der Softwareanwendung zusammenhängende Grafikinhalt übertragen werden soll, sowie das Ausgeben eines dritten Funktionsaufrufs, der zum Definieren eines zweiten Blickfelds ausgelegt ist, auf welches der zusätzliche Grafikinhalt übertragen werden soll.

8. Verfahren nach Anspruch 1, wobei das Abfangen des einen oder der mehreren ersten Funktionsaufrufe das Abfangen eines ersten Funktionsaufrufs umfasst; und
wobei das Ausgeben des einen oder der mehreren zweiten Funktionsaufrufe das Ausgeben eines zweiten Funktionsaufrufs umfasst, der zum Identifizieren eines Puffers ausgelegt ist, in welchen die mit der Softwareanwendung zusammenhängende Szene übertragen werden soll.

9. Verfahren nach Anspruch 8, wobei das Übertragen des zusätzlichen Grafikinhalts auf den zweiten Bereich der Displayfläche umfasst:
Abfangen eines dritten Funktionsaufrufs, der zum Darstellen einer Szene auf einem Display ausgelegt ist;
Wiedergeben der Szene in dem ersten Bereich der Displayfläche mittels des Puffers, wobei der Puffer eine mit der Softwareanwendung zusammenhängende übertragene Szene darstellt;
Ausgeben eines vierten Funktionsaufrufs, der zum Definieren eines Blickfelds mit einer Größe und Position, die der Größe und Position des zweiten Bereichs der Displayfläche entspricht, ausgelegt ist;
Übertragen des zusätzlichen Grafikinhalts auf das zweite Blickfeld; und
Ausgeben eines fünften Funktionsaufrufs, der zum Darstellen einer Szene auf einem Display ausgelegt ist, wobei die Szene die in den ersten Bereich der Displayfläche gezogene Szene sowie den auf das Blickfeld übertragenen zusätzlichen Grafikinhalt umfasst.

10. Verfahren nach Anspruch 1, wobei das Ausgeben des einen oder der mehreren zweiten Funktionsaufrufe, die zum Bewirken der Übertragung der mit der Softwareanwendung zusammenhängenden Grafikinhalte auf den ersten Bereich der Displayfläche ausgelegt ist, umfasst:
Ermitteln eines mit der Softwareanwendung zusammenhängenden Sicherungspuffers; und
Ändern der Größe des Sicherungspuffers dadurch, dass er zu einem Übertragungsziel mit der gewünschten Größe ausgeweitet wird.

11. Verfahren nach Anspruch 10, wobei das Übertragen des zusätzlichen Grafikinhalts auch den zweiten Bereich der Displayfläche umfasst:
Übertragen des zweiten zusätzlichen Grafikinhalts in Bereiche des größenveränderten Sicherungspuffers, die aufgrund der Größenveränderung nicht von dem mit der Softwareanwendung zusammenhängenden Grafikinhalt besetzt sind.

12. Verfahren nach Anspruch 1, wobei das Ausgeben des einen oder der mehreren zweiten Funktionsaufrufe, die zum Bewirken der Übertragung des mit der Softwareanwendung zusammenhängenden Grafikinhalts auf den ersten Bereich der Displayfläche ausgelegt ist, umfasst:
Erzeugen eines größenveränderten Fensters als Abkömmling eines der Softwareanwendung zusammenhängenden Fensters; und
Verwenden des größenveränderten Fensters als Übertragungsziel.

13. Verfahren nach Anspruch 12, wobei die Übertragung des zusätzlichen Grafikinhalts in den zweiten Bereich der Displayfläche umfasst:
Erzeugen zusätzlicher Abkömmlingsfenster zur Darstellung des zusätzlichen Grafikinhalts.

14. Verfahren nach Anspruch 1, ferner umfassend:
Abfangen eines oder mehrerer Funktionsaufrufe, die zum Darstellen eines Zeigerbilds in einer ersten Position innerhalb der Displayfläche ausgelegt sind; und
Verschieben einer Darstellung des Zeigerbilds in eine zweite Position innerhalb der Displayfläche, wobei die zweite Position innerhalb des ersten Bereichs der Displayfläche liegt und abhängig von der ersten Position bestimmt ist.

15. Verfahren nach Anspruch 14, ferner umfassend:
Umwandeln des Zeigerbilds in eine Bitmap oder Texturdarstellung des Pointerbilds als Reaktion auf das Abfangen des einen oder der mehreren Funktionsaufrufe, die zur Darstellung des Zeigerbilds in der ersten Position innerhalb der Displayfläche ausgelegt sind.

16. Computerprogrammprodukt, umfassend ein computerlesbares Medium mit einer darauf aufgezeichneten Computerprogrammlogik, die zum Ausführen des Verfahrens nach einem der Ansprüche 1 bis 15 dient.

17. System, umfassend:
ein Computersystem (200) zum dynamischen Größenverändern einer mit einer ausgeführten Anwendung zusammenhängenden Szene, so dass die Szene nur einen ersten Bereich einer Displayfläche einer Displayvorrichtung belegt, wobei der erste Bereich der Displayfläche kleiner als die Displayfläche ist; und einen Server, der in einer Kommunikationsverbindung mit dem Computersystem steht und dazu ausgelegt ist, Grafikinhalte für das Computersystem bereitzustellen;
wobei das Computersystem ferner dazu ausgelegt ist, die Grafikinhalte auf einen zweiten Bereich der Displayfläche der Displayvorrichtung zu übertragen, die nicht von dem ersten Bereich der Displayfläche umfasst ist.

18. System nach Anspruch 17, wobei der Grafikinhalt Werbeinhalt umfasst.

19. System nach Anspruch 17, wobei der zweite Bereich der Displayfläche bezüglich des ersten Bereichs der Displayfläche nicht überlappend ist.

## Revendications

1. Procédé de modification dynamique d'un contenu graphique associé à l'exécution d'une application de logiciel (302), comprenant:
intercepter (504) un ou plusieurs premiers appels de fonction émis par l'application de logiciel (302), un ou plusieurs premiers appels de fonction émis (502) par l'application de logiciel étant configurés pour amener un contenant graphique associé à l'application de logiciel à être représenté sur l'ensemble d'une zone d'affichage;
en réponse à l'interception d'un ou de plusieurs premiers appels de fonction de l'application de logiciel, émettre (506) un ou plusieurs deuxièmes appels de fonction configurés pour amener le contenant graphique associé à l'application de logiciel à être présenté sur une première portion de la zone d'affichage qui est plus petite que la zone d'affichage; et
représenter (508) un contenant graphique additionnel sur une deuxième portion de la zone d'affichage qui n'est pas couverte par la première portion de la zone d'affichage.

2. Procédé selon la revendication 1, dans lequel la deuxième portion de la zone d'affichage recouvre ou ne recouvre pas la première portion de la zone d'affichage.

3. Procédé selon la revendication 1, dans lequel le contenu graphique associé à l'application de logiciel comprend une scène associée à une application de jeu vidéo.

4. Procédé selon la revendication 1, dans lequel la représentation (508) du contenant graphique additionnel dans la deuxième portion de la zone d'affichage comprend la représentation d'un ou de plusieurs messages publicitaires dans la deuxième portion de la zone d'affichage.

5. Procédé selon la revendication 1, dans lequel l'interception (504) d'un ou de plusieurs premiers appels de fonction comprend l'interception d'un premier appel de fonction configuré pour définir une première fenêtre d'affichage d'une taille et d'un emplacement correspondant à la taille et à l'emplacement de la zone d'affichage; et
où l'émission (506) d'un ou de plusieurs deuxièmes appels de fonction comprend l'émission d'un deuxième appel de fonction configuré pour définir la première fenêtre d'affichage comme ayant une taille et un emplacement correspondant à la taille et à l'emplacement de la première portion de la zone d'affichage.

6. Procédé selon la revendication 5, dans lequel la représentation du contenu graphique additionnel dans la deuxième portion de la zone d'affichage comprend:
intercepter un troisième appel de fonction configuré pour présenter une scène sur un affichage, où la scène comprend un contenu graphique représenté dans la première fenêtre d'affichage;
émettre un quatrième appel de fonction configuré pour définir une deuxième fenêtre d'affichage d'une taille et d'un emplacement correspondant à la taille et à l'emplacement de la deuxième portion de la zone d'affichage;
représenter le contenu graphique additionnel sur la deuxième fenêtre d'affichage; et
émettre un cinquième appel de fonction configuré pour présenter une scène sur un affichage, où la scène comprend le contenu graphique représenté sur la première fenêtre d'affichage et le contenu graphique additionnel représenté sur la deuxième fenêtre d'affichage.

7. Procédé selon la revendication 1, dans lequel l'interception d'un ou de plusieurs premiers appels de fonction comprend l'interception d'un premier appel de fonction configuré pour créer un dispositif graphique; et
où l'émission d'un ou de plusieurs deuxièmes appels de fonction comprend l'émission d'un deuxième appel de fonction configuré pour définir une première fenêtre d'affichage dans laquelle le contenu graphique associé à l'application de logiciel doit être représenté, et l'émission d'un troisième appel de fonction configuré pour définir une deuxième fenêtre d'affichage dans laquelle le contenu graphique additionnel doit être représenté.

8. Procédé selon la revendication 1, dans lequel l'interception d'un ou de plusieurs premiers appels de fonction comprend l'interception d'un premier appel de fonction; et
l'émission d'un ou de plusieurs deuxièmes appels de fonction comprend l'émission d'un deuxième appel de fonction configuré pour identifier un tampon dans lequel une scène associée à l'application de logiciel doit être représentée.

9. Procédé selon la revendication 8, dans lequel la représentation du contenu graphique additionnel dans la deuxième portion de la zone d'affichage comprend:
intercepter un troisième appel de fonction configuré pour présenter une scène sur un affichage;
tirer la scène dans la première portion de la zone d'affichage en utilisant le tampon, le tampon représentant une scène restituée associée à l'application de logiciel;
émettre un quatrième appel de fonction configuré pour définir une fenêtre d'affichage d'une taille et d'un emplacement correspondant à la taille et à l'emplacement de la deuxième portion de la zone d'affichage;
représenter le contenu graphique additionnel dans la deuxième fenêtre d'affichage; et
émettre un cinquième appel de fonction configuré pour présenter une scène sur l'affichage, où la scène comprend une scène tirée dans la première portion de la zone d'affichage, et le contenu graphique additionnel représenté dans la fenêtre d'affichage.

10. Procédé selon la revendication 1, dans lequel l'émission d'un ou de plusieurs deuxièmes appels de fonction configurés pour amener le contenu graphique associé à l'application de logiciel à représenter sur la première portion de la zone d'affichage comprend:
obtenir un tampon arrière associé à l'application de logiciel; et
redimensionner le tampon arrière en l'étirant vers une cible de représentation d'une taille souhaitée.

11. Procédé selon la revendication 10, dans lequel la représentation du contenu graphique additionnel dans la deuxième portion de la zone d'affichage comprend:
présenter le contenu graphique additionnel dans des zones du tampon arrière redimensionné qui ne sont pas occupées par le contenu graphique associé à l'application de logiciel par suite du redimensionnement.

12. Procédé selon la revendication 1, dans lequel l'émission d'un ou de plusieurs deuxièmes appels de fonction configurés pour amener le contenu graphique associé à l'application de logiciel à être représenté sur la première portion de la zone d'affichage comprend:
créer une fenêtre redimensionnée en tant qu'enfant d'une fenêtre associé à l'application de logiciel; et
utiliser la fenêtre redimensionnée comme une cible de représentation.

13. Procédé selon la revendication 12, dans lequel la représentation du contenu graphique additionnel dans la deuxième portion de la zone d'affichage comprend:
créer une fenêtre d'enfant additionnelle pour l'affichage du contenu graphique additionnel.

14. Procédé selon la revendication 1, comprenant en outre:
intercepter un ou plusieurs appels de fonction configurés pour afficher une image de pointeur à une première position dans la zone d'affichage; et
tirer une représentation de l'image de pointeur vers une deuxième position dans la zone d'affichage, où la deuxième position se situe dans première portion de la zone d'affichage et est déterminée sur la base de la première position.

15. Procédé selon la revendication 14, comprenant en outre:
en réponse à l'interception d'un ou de plusieurs appels de fonction configurés pour afficher l'image de pointeur à la première position dans la zone d'affichage, convertir l'image de pointeur en une représentation de topogramme binaire ou de texture de l'image de pointeur.

16. Produit de programme informatique comprenant un support lisible par ordinateur ayant une logique de programme informatique enregistrée sur celui-ci agencée pour mettre en oeuvre le procédé selon l'une quelconque des revendications 1 à 15.

17. Système, comprenant:
un système informatique (200) configuré pour redimensionner dynamiquement une scène associée à une application d'exécution de sorte que la scène occupe seulement une première portion d'une zone d'affichage d'un dispositif d'affichage, la première portion de la zone d'affichage étant plus petite que la zone d'affichage; et
un serveur en connexion de communication avec le système informatique pour servir un contenant graphique au système informatique;
où le système informatique est configuré en outre pour représenter le contenu graphique sur une deuxième portion de la zone d'affichage du dispositif d'affichage qui n'est pas couverte par la première portion de la zone d'affichage.

18. Système selon la revendication 17, dans lequel le contenu graphique comprend un contenu publicitaire.

19. Système selon la revendication 17, dans lequel la deuxième portion de la zone d'affichage n'est pas en chevauchement avec la première portion de la zone d'affichage.
